# EUROPEAN PATENT APPLICATION

(11) **EP 0 709 784 A2**
(43) Date of publication of application: **01.05.1996**
(21) Application number: 95306633.9
(22) Date of filing: 20.09.1995
(51) Int. Cl.: G06F 13/36

(54) **Bus locking mechanism in a computer system**

(30) Priority: 24.10.1994 US 328178
(71) Applicant: International Business Machines Corporation, Armonk, N.Y. 10504 (US)
(72) Inventor: Amini, Ismael, Boca Raton, Florida 33434 (US); Hoang, Danny Quoc, Austin, Texas 78728 (US); Kohli, Ashu, Austin, Texas 78759 (US); Le, Phat Tuan, Austin, Texas 78758 (US); Stelzer, Kevin Caryle, Austin, Texas 78750 (US); Yee, Edward, Austin, Texas 78758 (US)
(74) Representative: Horner, David Richard

(57) **Abstract**

A bus locking mechanism is provided in a computer system having a central processing unit connected to a memory controller, a memory connected to the memory controller via a memory bus and a peripheral interface connected to the memory controller via an input-output bus. The locking mechanism preferably uses the processor's N_RSRV output signal to detect the state of the central processor's internal reservation coherency bit. When this bit is set, the memory controller locks the memory and input-output busses for the exclusive use of the central processor. This bus locking prevents a bus mastering peripheral device from interrupting the processor while the processor is performing a Read/Modify/Write instruction.

## Description

### TECHNICAL FIELD OF THE INVENTION

This invention relates to computer systems and in particular to systems in which certain program instructions are executed by the processor in a locked bus cycle mode. Locked instructions are program instructions that must be executed without interruption.

### BACKGROUND OF THE INVENTION

Personal computer systems typically had a single processor or central processing unit ("CPU") that controlled the operation of the computer system. The CPU accessed system memory either directly or by sending reguests to a memory controller.

To provide enhanced memory access, the CPU was provided with a relatively small high speed static random access memory, known as a cache memory, wherein a portion of data or code stored in the system's memory was duplicated and available to the processor for quick access. Idealized cache memory systems seek to match the data or code held in the cache to the upcoming processor data or code requests to minimize the number of times the processor has to access system memory.

Further developments to enhance the speed at which the system operated included the addition of direct memory access ("DMA") devices which permitted system elements other than the processor to access system memory directly without going through the processor. To control direct memory access by various system elements, a more advanced memory controller was included in advanced systems.

In these more advanced systems, the various elements, including the processor, are necessarily connected to a common bus or series Of busses to access memory and to communicate data, control and address signals to other system elements. System elements which are able to obtain control of a bus are known as bus masters. Since only one bus master can have control of the bus at one time it was necessary to develop bus control logic circuitry which controlled which bus master had access to the bus or busses and arbitrated between conflicting requests. In such computer systems, if a first bus master had control of the bus when a second bus master requested the bus, the arbitration logic could put the first device in a hold state and transfer control of the bus to the second bus master. In such systems it is therefore possible that control of the bus by a bus master, such as the processor, could be interrupted.

Many advanced computer systems have means to avoid interrupting the processor when it is performing tasks or instructions that need to be executed in consecutive bus cycles.

For example, the Intel 82385 Cache controller system uses the LOCK* output of the Intel 80386 processor to implement a bus locking mechanism. The operation of the 82385 controller is described in IBM Technical Disclosure Bulletin, Vol. 32, No. 6A, p. 208, Nov. 1989 by Begun et al. A more advanced locking mechanism, U.S. Pat. No. 5,163,143, issued on Nov. 10, 1992 to Culley et al., uses the LOCK* output from an 80386 processor to implement an advanced locking scheme that increases memory cache efficiency. Similarly, IBM Technical Disclosure Bulletin, Vol. 36, No. 06B, June 1993 by Nakada et al. describes the workings of the LOCK# output from an Intel 80486 processor and a related system modification.

All of the above-described prior art bus locking schemes, however, are dependent on receiving a LOCK output from the processor. Such a scheme will not work in computer systems utilizing processors such as a PowerPC processor because the PowerPC processor lacks such an output.

In current PowerPC-based systems, the PowerPC processor is connected to a memory controller via a local bus. A memory controller is also connected to the local bus. The memory controller is also connected to system memory by a memory bus and various input-output ("I/O") devices via an I/O bus. These I/O devices can be bus masters.

The PowerPC processor often accesses memory using a Read/Modify/Write instruction. During the "modify" part of the instruction, the memory bus will appear to be idle because the processor is not accessing the memory. At this time, the memory controller will grant memory access to a requesting bus master because the memory bus appears idle.

When the bus master requests access to a certain memory address, the memory controller will drive a "snoop" cycle on the local bus to determine whether the requested address has been cached within cache memory. If the requested memory address is the same as that currently being accessed by the processor's Read/Modify/Write instruction, the processor will cancel the instruction and retry it later. Frequent occurrences of the above-described condition causes a slowdown of the PowerPC-based computer system because of the processor's need to cancel and then reschedule the instruction.

In addition, the PowerPC's lack of a locking signal may make it difficult to design system software compatible with both Intel 80X86 and PowerPC system architectures.

The object of the present invention is to provide a bus locking mechanism which will enable the CPU to execute a program instruction without interruption.

### SUMMARY OF THE INVENTION

Viewed from a first aspect the present invention provides a method of locking a memory bus and an input-output bus for the use of a central processing unit of a computer system, the method comprising the steps of: detecting the status of an output signal from said central processing unit; analyzing said output signal to determine whether said memory and said input-output busses should be locked; and locking said memory and said input-output busses when required by said output signal.

Viewed from a second aspect the present invention provides a computer system comprising: a memory controller; a central processing unit having a processing state; a peripheral interface; a memory; a memory bus connecting said memory controller to said memory; an input-output bus connecting said peripheral interface to said memory controller; detecting means for detecting said processing state of said central processing unit; and locking means for locking said memory bus for the use of said central processing unit when said processing state is a predetermined state.

The present invention provides a bus locking mechanism wherein the CPU can execute a program instruction as soon as possible and without interruption. Further it provides a method of enhancing compatibility for software programs written for both the Intel 80X86 and PowerPC architectures.

Preferred embodiments of the present invention use an N_RSRV signal generated by the CPU to lock the memory and I/O system busses for the CPU. When the memory controller grants bus access to the CPU and detects that the N_RSRV signal is active, the memory controller locks the memory and I/O busses for the CPU. The CPU has exclusive access to the memory and I/O busses until it deactivates the N_RSRV signal.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

The present invention will be described further, by way of example only, with reference to a preferred embodiment thereof as illustrated in the accompanying drawings, in which:
FIGURE 1 shows a block diagram of a computer system utilizing a common PowerPC bus architecture, according to a preferred embodiment of the present invention; and
FIGURE 2 (comprising Figures 2A and 2B) is a timing chart that represents the digital logic within the memory controller according to a preferred embodiment of the present invention.

### DETAILED DESCRIPTION OF A PREFERRED EMBODIMENT OF THE INVENTION

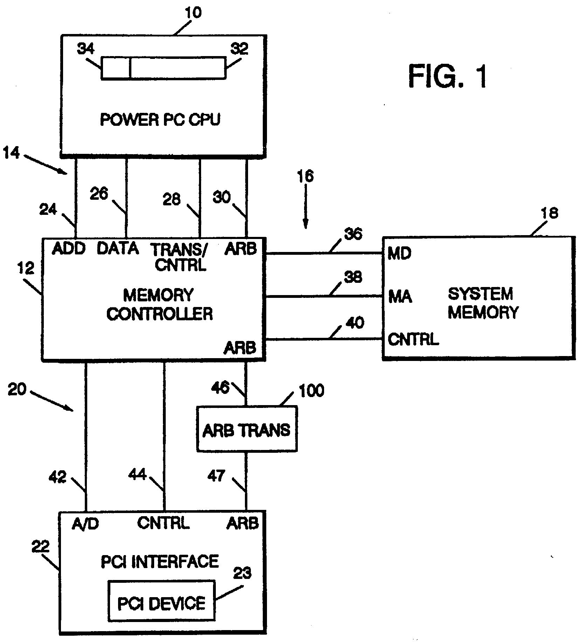

FIGURE 1 depicts a typical computer system using the Peripheral Component Interconnect ("PCI") architecture and a PowerPC processor. A CPU 10 is connected to a memory controller 12 via a local bus 14. The memory controller 12 is connected via a memory bus 16 to a memory 18. The memory controller 12 is also connected via a PCI bus 20 to a PCI interface 22. The PCI interface 22 can be connected to one or more PCI peripherals 23.

The CPU 10 has several internal registers 32 and each register holds a plurality of bits. One such bit is the Internal Reservation Coherency bit 34 which is set by the CPU 10 during atomic read and write operations. More specifically, the bit 34 is set when an atomic load instruction is executed by the CPU 10 and cleared after the CPU 10 executes an atomic store instruction.

As stated above, the memory controller 12 is connected via busses to the CPU 10, memory 18 and PCI interface 22. The memory controller 12 arbitrates and serves memory requests from the CPU 10 and bus mastering PCI peripheral devices 23.

The PCI interface 22 design is well known in the prior art as described in the PCI Local Bus Specification Revision 2.0 published in 1992 by the PCI Special Interest Group (a copy of which is available from the PCI Special Interest Group, Hillsboro, Oregon, USA), and need not be discussed here. PCI peripheral devices 23 can be bus masters and would typically comprise things such as storage or data acquisition devices. The PCI peripheral devices 23 generate the signals that are sent to the PCI bus 20 via the PCI interface 22.

The local bus 14 connecting the CPU 10 to the memory controller 12 consists of four sets of bus lines 24, 26, 28, 30. The first set of lines are the address lines 24. The second set are the data lines 26. The third set are the control lines 28. The fourth set are the arbitration lines 30.

The functions and uses of the address 24, data 26 and control 28 lines are well understood in the prior art. For example, the reader is referred to the PowerPC 603 User(s) Manual, Motorola Inc. (1993), which contains an exemplary discussion of the function of these lines (a copy of the manual can be obtained from IBM PowerPC Literature, c/o OTI, 1000 East Business Centre Drive, Mt. Prospect, Illinois 60056; the order numbers are MPR603UMU-01 and MPC603UM/AD).

The arbitration lines 30 are used by the CPU 10 to send and receive messages regarding the status of the busses 14, 16, 20. These messages include N_CPU_BR 50, N_CPU_BG 52, and N_RSRV 54. The N_CPU_BR 50 signal is activated by the CPU 10 to indicate to the memory controller 12 that the CPU 10 wishes to access a device external to the CPU 10. The N_CPU_BG 52 signal is sent by the memory controller 12 to the CPU 10 to inform the CPU 10 that it is allowed to perform a read or write cycle. The N_RSRV 54 signal is sent by the CPU 10 to reflect the state of the CPU's 10 Internal Reservation Coherency bit 34.

The memory 18 is connected to the memory controller 12 via the memory bus 16. The memory bus consists of three sets of lines. One set of lines 36 carries data, another set 38 carries address information, and a third set 40 carries control signals. The design and function of the memory bus 16 is well known in the prior art and need not be discussed in detail.

The PCI interface 22 is connected to the memory controller 12 via a PCI bus 20. The standard design of a PCI bus is well known in the prior art. The PCI bus 20 is comprised of three sets of lines. The first set of lines 42 carries both address and data information. The second set of lines 44 carries control signals. The third set of lines 46, 47 carries arbitration signals. A logic device 100 is located on the arbitration lines 46, 47 and processes signals sent by the memory controller 12 and the PCI device 23. Thus, the arbitration lines 46, 47 are actually two separate lines. One set of lines 46 connects the logic device 100 to the memory controller 12 while the other set 47 connects the logic device 100 to the PCI interface 22.

The arbitration signals carried on the arbitration lines 46 between the logic device 100 and the memory controller 12 include PCI_HOLD 56 and PCI_HLDA 58. These signals are used by the logic device 100 to control the activation of the PCI arbitration lines 47. Signals carried on the arbitration line 47 between the logic device 100 and the PCI interface 22 include N_REQO 101 and N_GNTO 102. N_REQO 101 is sent by a PCI peripheral device 23 to the logic device 100 requesting access to the PCI bus 20 and, in turn, to the memory bus 16. The external logic 100 will activate PCI_HOLD 56 in response to N_REQO 101. PCI_HLDA is sent by the memory Controller 12 to the logic device 100, which in turn activates N_GNTO 102 to the PCI peripheral 23 to acknowledge that the PCI peripheral 23 has access to the PCI bus 20 and, in turn, to the memory bus 16.

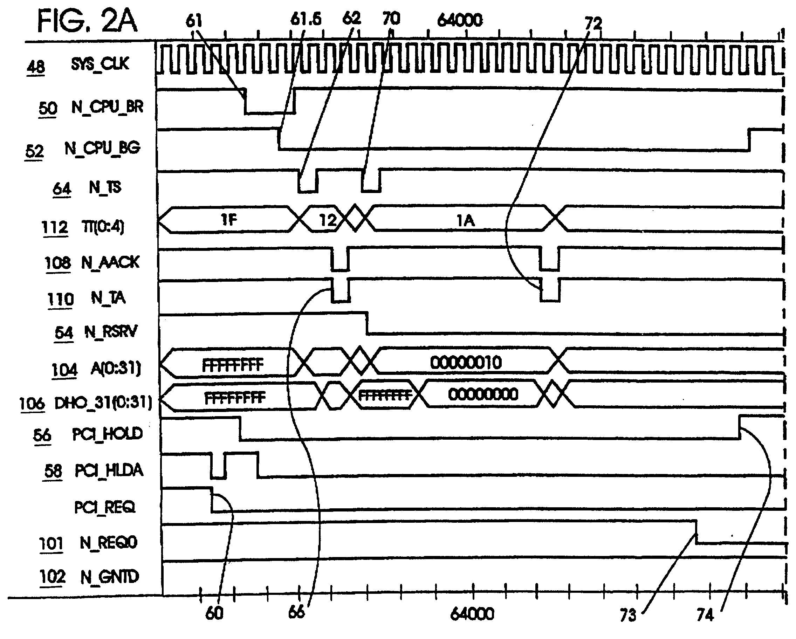

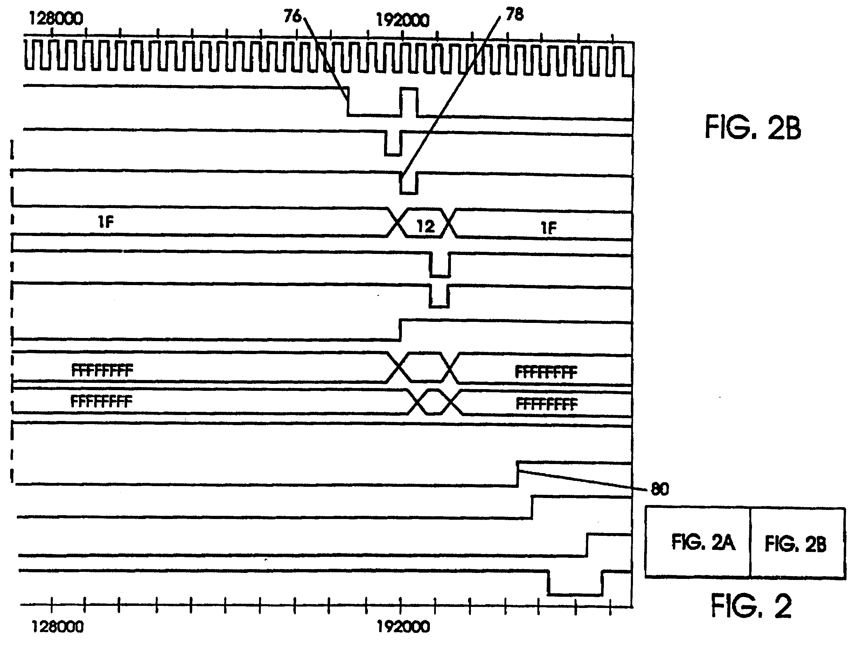

FIGURE 2 is a timing diagram representing the digital logic within the memory controller 12. The diagram shows a clock pulse 48 which is the computer's system clock. Also shown are the N_CPU_BR 50, N_CPU_BG 52, N_TS 64, TT(0:4) 112, N_AACK 108, N_TA 110, N_RSRV 54, A(0:31) 104, DH0_31(0:31) 106, PCI_HOLD 56, PCI_HLDA 58, N_REQ0 101 and N_GNT0 102 signals. Signals with names that begin with N_ are active when driven low and signals without that indicator are active when driven high.

The initial state of the diagram shows that the N_CPU_BR 50 signal is high, indicating to the memory controller 12 that the CPU 10 is not requesting access to the memory bus 16. Both PCI_HOLD 56 and PCI_HLDA are high, indicating that a PCI peripheral device 23 is accessing the memory bus 16.

At time 60, PCI_HOLD 56 goes low, indicating that the PCI peripheral device 23 no longer needs the memory bus 16. At time 61, the CPU 10 requests access to the busses 16, 20 by lowering N_CPU_BR 50. At time 61.5, the memory controller 12 grants the CPU 10 access to the busses 16, 20 by lowering N_CPU_BG 52. At time 62, the CPU 10 begins bus access, indicated by a signal pulse on N_TS 64. The signal on TT(0:4) 112 identifies the type of CPU access. In this case, TT(0:4) 112 is a "12", identifying the access as a write. At time 66, the CPU 10 finishes its write cycle, indicated by pulses on N_TA 68 and N_AACK 108.

At time 70, the CPU 10 begins a read/modify/write instruction, indicated by a second pulse on N_TS 64 and a "1A" on TT(0:4) 112. The CPU 10 need not make a second request for memory bus 16 access because N_CPU_BG 52 is still low. At the same time 70, the CPU 10 sets its Internal Reservation Coherency bit 34. The status of this bit 34 is reflected externally to the memory controller 12 by the N_RSRV 54 going active. At time 72, the CPU 10 finishes the read stage of its instruction, as indicated by pulses on N_TA 68 and N_AACK 108.

After the CPU 10 has completed the read stage of its instruction, the CPU 10 spends time performing modifications on the data. These modifications are performed entirely within the CPU 10. Thus, the CPU 14 and memory 16 busses are idle during this time period.

At time 73, a PCI peripheral device 23 requests access to the memory bus 16, indicated by N_REQ0 101 going low. The logic device 100 processes the device's 23 requests and in turn raises PCI_HOLD 56 at time 74. At this time 74, a memory controller without the claimed invention would grant access to the PCI peripheral 23 because the memory bus 16 appears idle (N_CPU_BR 50 is high).

The inventive memory controller 12, however, does not grant the requesting PCI peripheral device 23 access to the memory bus 16 because the controller 12 senses that the N_RSRV 54 signal is low. Instead, the memory controller 12 locks the memory 16 and PCI 20 busses until the CPU 10 has finished the write portion of its read/modify/write instruction.

At time 76, the CPU 10 is ready to perform the write portion of the read/modify/write instruction. The CPU 10 signals the memory controller 12 that it needs access to the memory bus 16 by lowering N_CPU_BR 50. Shortly thereafter, the memory controller 12 grants the CPU 10 memory bus 16 access by lowering N_CPU_BG 52. At time 78, the CPU 10 performs the write cycle, indicated by a pulse on N_TS 64 and a "12" on TT(0:4) 112. At the same time 78, the CPU 10 clears its Internal Reservation Coherency bit 34, which is reflected externally by N_RSRV 54 going high. The memory controller 12 senses from N_RSRV 54 that it no longer needs to lock the PCI 20 and memory 16 busses.

At time 80, the memory controller 12 grants the requesting PCI device 23 memory bus 16 access by raising PCI_HLDA 58. Shortly thereafter, the logic device 100 grants bus access to the PCI device 23 by lowering N_GNT0 102.

Although the present invention and its advantages have been described in detail, it should be understood that various changes, substitutions and alterations can be made herein without departing from the spirit and scope of the invention as defined by the appended claims.

## Claims

1. A method of locking a memory bus and an input-output bus for the use of a central processing unit of a computer system, the method comprising the steps of:
detecting the status of an output signal from said central processing unit;
analyzing said output signal to determine whether said memory and said input-output busses should be locked; and
locking said memory and said input-output busses when required by said output signal.

2. A method as claimed in Claim 1, wherein the output signal indicates a state of a bit within a register of said central processing unit, and the step of locking said memory and input-output busses for the use of said central processing unit occurs when the signal indicates that said state of said bit is set.

3. A method as claimed in Claim 2, wherein said bit is an internal reservation coherency bit.

4. A method as claimed in any of Claims 1 to 3, wherein said output signal is a N_RSRV signal.

5. A method as claimed in any preceding claim, wherein said central processing unit is of a PowerPC architecture.

6. A method as claimed in any preceding claim, wherein said input-output bus is of a Peripheral Component Interconnect architecture.

7. A computer system comprising:
a memory controller (12);
a central processing unit (10) having a processing state;
a peripheral interface (22);
a memory (18);
a memory bus (16) connecting said memory controller to said memory (12);
an input-output bus (20) connecting said peripheral interface (22) to said memory controller (12);
detecting means for detecting said processing state of said central processing unit; and
locking means for locking said memory bus for the use of said central processing unit when said processing state is a predetermined state.

8. A computer system as claimed in Claim 7, further comprising locking means for locking said input-output bus for the use of said central processing unit when said processing state is said predetermined state.

9. A computer system as claimed in Claim 7 or Claim 8, wherein said detecting means is arranged to detect the state of a bit associated with said central processing unit, said bit having set and clear states, and said locking means is arranged to lock said memory bus when said state of said bit is set.

10. A computer system as claimed in Claim 9, wherein said bit is an internal reservation coherency bit.

11. A computer system as claimed in any of claims 7 to 10, wherein said detecting means is arranged to detect an N_RSRV signal generated by said central processing unit.

12. A computer system as claimed in any of claims 7 to 11, wherein said predetermined state is a Read/Modify/Write processing state.
